# EUROPEAN PATENT SPECIFICATION

(11) **EP 4 401 442 B1**
(45) Date of publication and mention of the grant of the patent: **29.07.2026**
(21) Application number: 22875002.2
(22) Date of filing: 28.09.2022
(51) Int. Cl.: H04W 12/06, H04W 12/30, H04W 12/69, H04W 24/02, H04L 9/40

(54) **MAIN AUTHENTICATION METHOD AND APPARATUS**
HAUPTAUTHENTIFIZIERUNGSVERFAHREN UND -VORRICHTUNG
PROCÉDÉ ET APPAREIL D'AUTHENTIFICATION PRINCIPALE

(30) Priority: 30.09.2021 CN 202111166048
(43) Date of publication of application: 17.07.2024
(73) Proprietor: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN)
(74) Representative: Epping - Hermann - Fischer
(86) International application number: PCT/CN2022/122179
(87) International publication number: WO 2023/051619

(56) References cited:
- WO-A1-2021/094109
- CN-A- 109 041 057
- CN-A- 109 922 474
- CN-A- 110 891 271
- CN-A- 110 891 271
- CN-A- 112 351 425
- US-B1- 9 042 884
- NEC ET AL: "Solution to support Fast Re-authentication in 5GS", vol. SA WG3, no. Stockholm (Sweden); 20190311 - 20190315, 4 March 2019 (2019-03-04), XP051697572, Retrieved from the Internet <URL:http://www.3gpp.org/ftp/tsg%5Fsa/WG3%5FSecurity/TSGS3%5F94AH%5FKista/Docs/S3%2D190634%2Ezip> [retrieved on 20190304]
- NEC: "UDM triggered authentication", vol. SA WG3, no. Reno (US); 20190506 - 20190510, 28 April 2019 (2019-04-28), XP051721382, Retrieved from the Internet <URL:http://www.3gpp.org/ftp/tsg%5Fsa/WG3%5FSecurity/TSGS3%5F95%5FReno/Docs/S3%2D191208%2Ezip> [retrieved on 20190428]

## Description

### CROSS-REFERENCE TO RELATED APPLICATIONS

### TECHNICAL FIELD

This application relates to the field of communication technologies, and in particular, to a primary authentication method, a communication apparatus, a computer-readable storage medium, and a computer program.

### BACKGROUND

To ensure security of communication between a terminal device and a network side, an authentication and key agreement (authentication and key agreement, AKA) procedure needs to be executed between the terminal device and the network. The AKA procedure is a bidirectional authentication procedure, including user authentication and network authentication. The user authentication means that the network authenticates users, to prevent unauthorized users from occupying network resources. The network authentication means that a user authenticates a network, to prevent key information from being extracted due to access of an unauthorized network by the user.

In a fifth generation (5th-generation, 5G) communication system, two authentication methods are supported: 5G-AKA and extensible authentication protocol-authentication and key agreement (extensible authentication protocol-authentication and key agreement, EAP-AKA'). In a current standard, triggering of a primary authentication procedure is determined by an access and mobility management function (access and mobility management function, AMF) in a serving network (serving network, SN). Currently, in a solution, a home network (home network, HN) may trigger the primary authentication procedure. Specifically, an authentication server function (authentication server function, AUSF) in the HN may request the AMF for triggering the primary authentication procedure, or a user data management (user data management, UDM) may request the AMF for triggering the primary authentication procedure.

A quantity of devices that trigger the primary authentication procedure increases. Therefore, how to improve authentication efficiency when ensuring communication security is an urgent problem to be resolved.

Document CN 110 891 271 A discloses an authentication method and device, which are used for avoiding the problem of registration failure caused by authentication failure due to the fact that a next-generation core network NGC cannot obtain legal user data of the existing network under the condition that an original 4G user switches to a 5G experimental network coverage range. The authentication method provided by the invention comprises the following steps that: an authentication service function (AUSF) entity receives an initial authentication request sent by an access and mobility management function (AMF) entity; the AUSF entity sends an authentication information request to a unified data management UDM entity and a home subscriber server HSS; and the AUSF entity receives an authentication information response fed back by the UDM entity and the HSS.

Document WO 2021/094109 A1 provides a method for initiating primary reauthentication of a communication device by a home network (UDM or AUSF). A trigger to initiate a primary reauthentication request of a communication device is detected. An authentication status of the subscription permanent identifier (SUPI) of the communication device is checked. Responsive to the authentication status of the SUPI being obsolete or null, a reauthentication message is transmitted towards an access and mobility management function (AMF) node. A reauthentication confirmation message is received. A determination is made as to whether to continue, abort, or postpone any steering of roaming (SoR) updates, any user equipment parameter updates (UPU updates) or any authentication and key agreement for applications (AKMA) procedures based on the reauthentication confirmation message.

3GPP document S3-191208, "UDM triggered authentication" from NEC, 3GPP TSG-SA WG3 Meeting #95, Reno (US), 6-10 May 2019, DRAFT CHANGE REQUEST for 33.501, version 15.4.0, discusses that amongst others, the procedures SoR and UPU rely on the presence of a KAUSF in both the UE and the AUSF. A UE that has been handed over from EPC to 5G may not have such a key under some conditions. In order to overcome this problem, this CR does the following: Adds a new clause on UDM triggered authentication, and modifies clause 6.1.2 to specify SEAF behaviour after receiving a UDM authenticates specific UE request.

### SUMMARY

This application provides a primary authentication method, a communication apparatus, a computer-readable storage medium, and a computer program, to resolve a problem of how to improve authentication efficiency when ensuring communication security. The present invention is defined by the attached set of claims. Embodiments and aspects which are not covered by the invention should be considered as examples useful for understanding the invention.

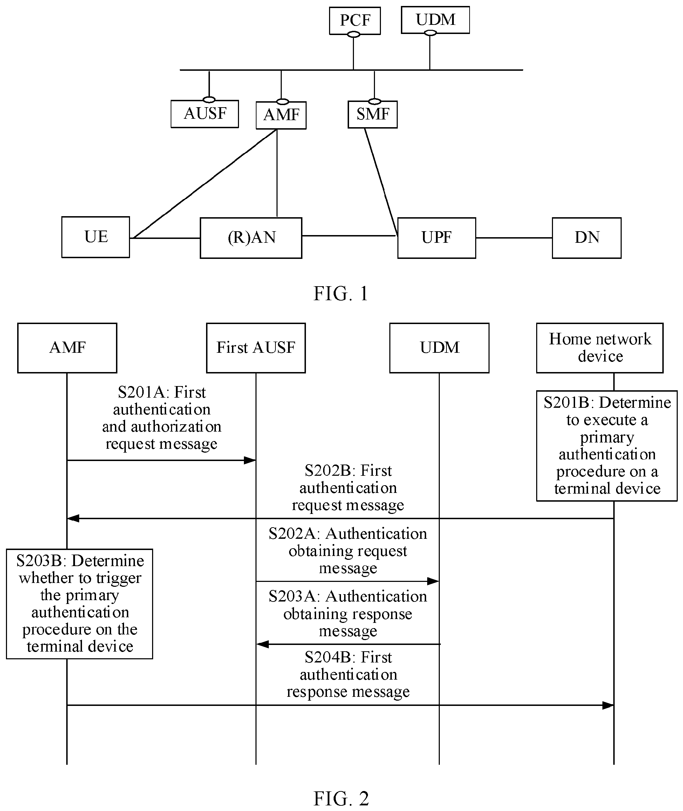

In this application, an access and mobility management function device in a first aspect and a third aspect may perform steps or procedures performed by an AMF in procedures in FIG. 2 to FIG. 5, a home network device may perform steps or procedures performed by a UDM or a second AUSF in the procedures in FIG. 2 to FIG. 5, a user data management device may perform steps or procedures performed by the UDM in the procedures in FIG. 2 to FIG. 5, and an authentication server function device may perform steps or procedures performed by a third AUSF in the procedures in FIG. 2 to FIG. 5.

According to a first aspect, this application provides a primary authentication method. The method includes: An access and mobility management function device receives a first authentication request message from a home network device, where the first authentication request message includes an identifier of a terminal device, the first authentication request message is used to trigger a primary authentication procedure on the terminal device, and the home network device is a network device in a home network of the terminal device. When the access and mobility management function device rejects the triggering of the primary authentication procedure, the access and mobility management function device sends a first authentication response message to the home network device, where the first authentication response message includes first rejection cause information, and the first rejection cause information indicates a cause for rejecting the triggering of the primary authentication procedure.

According to the method, when the home network device in the home network triggers the primary authentication procedure on the terminal device, the AMF determines whether to accept a request triggered by the home network device, so that a conflict with a primary authentication procedure triggered by the AMF can be avoided, and an unnecessary repeated authentication procedure can be avoided, thereby improving authentication efficiency.

The access and mobility management function device determines, based on the first authentication request message, to reject the triggering of the primary authentication procedure on the terminal device.

In a possible implementation, that the access and mobility management function device determines, based on the first authentication request message, to reject the triggering of the primary authentication procedure includes:
If determining, based on the identifier, that a primary authentication procedure has been triggered on the terminal device within preset duration, the access and mobility management function device determines to reject the triggering of the primary authentication procedure.

That the access and mobility management function device determines, based on the identifier, that the home network device does not have permission to trigger the primary authentication procedure includes: The access and mobility management function device obtains subscription data of the terminal device based on the identifier. The access and mobility management function device determines, based on the subscription data, that the home network device does not have the permission to trigger the primary authentication procedure.

In a possible implementation, the subscription data indicates that the terminal device does not support at least one of a steering of roaming procedure, a user equipment parameter update procedure, or an authentication and key management for applications procedure.

In a possible implementation, that the access and mobility management function device determines, based on the first authentication request message, to reject the triggering of the primary authentication procedure includes:
If determining, based on the identifier, that a primary authentication procedure is being executed on the terminal device, the access and mobility management function device determines to reject the triggering of the primary authentication procedure.

In a possible implementation, that the access and mobility management function device determines, based on the identifier, that a primary authentication procedure is being executed on the terminal device includes:
When the access and mobility management function device has triggered the authentication procedure on the terminal device corresponding to the identifier, and receives no corresponding authentication result, the access and mobility management function device determines that the primary authentication procedure is being executed on the terminal device.

According to a second aspect, this application further provides a communication apparatus. The communication apparatus implements any method according to the foregoing first aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the access and mobility management function device in the foregoing method. The communication apparatus may further include a memory, and the memory may be coupled to the processor, and store program instructions and data that are necessary for the communication apparatus. Optionally, the communication apparatus further includes an interface circuit. The interface circuit is configured to support the communication apparatus in performing communication.

In a possible implementation, the communication apparatus includes corresponding functional modules, configured to implement the steps in the foregoing method. A function may be implemented by hardware, or may be implemented by hardware executing corresponding software. The hardware or software includes one or more modules corresponding to the foregoing function. In a possible implementation, a structure of the communication apparatus includes a processing unit and a communication unit. These units may perform corresponding functions in the foregoing method examples. For details, refer to the descriptions in the method according to the first aspect. Details are not described herein again.

According to a third aspect not claimed but useful for understanding the invention, this application provides a primary authentication method, including: A user data management device receives a first message from an authentication server function device, where the first request message includes an identifier of a terminal device, and the first message is used to request a first authentication vector for the terminal device.

When rejecting to return the first authentication vector, the user data management device sends a first response message to the authentication server function device, where the first response message includes second rejection cause information, and the second rejection cause information indicates a cause for rejecting to return the first authentication vector.

In each primary authentication procedure, the user data management device needs to generate an authentication vector, then complete bidirectional authentication between the network side and the terminal device based on the authentication vector, and generate a corresponding security context in the authentication process. According to the foregoing method, the user data management device may control the primary authentication procedure by determining whether to return the first authentication vector. In this way, an unnecessary authentication procedure can be avoided. For example, repeated execution of the primary authentication procedure for a plurality of times in a short time may be avoided, thereby improving authentication efficiency and communication efficiency.

In a possible implementation, when determining to return the first authentication vector, the user data management device sends a first response message to the authentication server function device, where the first response message includes trigger indication information, and the trigger indication information indicates to execute the primary authentication procedure on the terminal device.

In a possible implementation, the user data management device determines, based on the first request message, to reject to return the first authentication vector.

In a possible implementation, that the user data management device determines, based on the first request message, to reject to return the first authentication vector includes: If determining, based on the identifier, that a primary authentication procedure has been triggered on the terminal device within preset duration, the user data management device determines to reject to return the first authentication vector.

In a possible implementation, the first request message includes the identifier of the terminal device, and that the user data management device determines, based on the first request message, to reject to return the first authentication vector includes:
If determining, based on the identifier, that a primary authentication procedure is being executed on the terminal device, the user data management device determines to reject to return the first authentication vector.

In a possible implementation, that the user data management device determines, based on the identifier, that the primary authentication procedure is being executed on the terminal device includes: when the user data management device has sent a second authentication vector used to perform authentication on the terminal device corresponding to the identifier, and receives no authentication result confirmation message corresponding to the second authentication vector, determining that the primary authentication procedure is being executed on the terminal device. According to a fourth aspect not claimed but useful for understanding the invention, this application further provides a communication apparatus. The communication apparatus implements any method according to the foregoing third aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the user data management device in the foregoing method. The communication apparatus may further include a memory, and the memory may be coupled to the processor, and store program instructions and data that are necessary for the communication apparatus. Optionally, the communication apparatus further includes an interface circuit. The interface circuit is configured to support the communication apparatus in performing communication.

In a possible implementation, the communication apparatus includes corresponding functional modules, configured to implement the steps in the foregoing method. A function may be implemented by hardware, or may be implemented by hardware executing corresponding software. The hardware or software includes one or more modules corresponding to the foregoing function. In a possible implementation, a structure of the communication apparatus includes a processing unit and a communication unit. These units may perform corresponding functions in the foregoing method examples. For details, refer to the descriptions in the method according to the third aspect. Details are not described herein again.

A computer-readable storage medium is further provided, where the computer-readable storage medium stores a computer program or instructions. When the computer program or the instructions is or are run on a computer, the computer is enabled to implement the method according to any possible implementation of the first aspect.

A computer program product storing computer-readable instructions is further provided. When the computer-readable instructions are run on a computer, the computer is enabled to implement the method according to any possible implementation of the first aspect.

According to a further aspect, a chip is provided. The chip includes a processor, and may further include a memory. The processor is coupled to the memory, and is configured to execute a computer program or instructions stored in the memory, so that the chip implements the method according to any possible implementation of the first aspect.

### BRIEF DESCRIPTION OF DRAWINGS

FIG. 1 is a schematic diagram of a network architecture applicable to an embodiment of this application;
FIG. 2 is a schematic flowchart of a primary authentication method according to an embodiment of this application;
FIG. 3 is a schematic flowchart of a communication method according to an embodiment of this application;
FIG. 4 is a schematic flowchart of a primary authentication method according to an embodiment of this application;
FIG. 5 is a schematic flowchart of a primary authentication method according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

The following describes embodiments of this application in detail with reference to the accompanying drawings of this specification.

Embodiments of this application may be applied to various mobile communication systems, for example, a new radio (new radio, NR) system, a long term evolution (long term evolution, LTE) system, a future communication system, and other communication systems. Specifically, this is not limited herein.

For ease of understanding embodiments of this application, a communication system shown in FIG. 1 is first used as an example to describe in detail a communication system applicable to embodiments of this application. FIG. 1 is a schematic diagram of a communication system applicable to a communication method according to an embodiment of this application. As shown in FIG. 1, the communication system includes user equipment (user equipment, UE), an access network (access network, AN) device, a user plane function (user plane function, UPF), a data network (data network, DN), an AUSF, an AMF, a session management function (session management function, SMF), a policy control function (policy control function, PCF), a UDM, and the like.

The AMF and the SMF in FIG. 1 each are a serving network of a terminal device, and are also referred to as a visited network. The AUSF and the UDM belongs to a home network of the terminal device, and are also referred to as a home network.

The UE may also be referred to as a terminal device, and is a device having a wireless transceiver function or a chip that can be disposed in the device. During actual application, the terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the device having the wireless transceiver function and the chip that can be disposed in the device are collectively referred to as the terminal device.

An access network device may also be referred to as a radio access network (radio access network, RAN) device, and may be a wireless access device in various standards, for example, may be a next generation base station (next generation NodeB, gNB) in an NR system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), a transmission and reception point (transmission and reception point, TRP or transmission point, TP), or the like.

The AUSF is mainly responsible for user authentication, and is used by a network to verify whether a user is authorized.

The UPF is a user-plane data egress of the terminal device and is connected to an external network. The AMF is a network element mainly responsible for mobility management, and main functions include a termination point of a radio access network control plane, a termination point of non-access signaling, mobility management, lawful interception, access authorization or authentication, and the like. The AMF and a security anchor function (security anchor function, SEAF) may be combined into one physical entity, or may be separately set as independent physical entities.

The UDM is mainly responsible for functions such as user subscription data management.

The DN may be a network that provides a service for the terminal device.

Functions of other devices in FIG. 1 are not limited in this application, and details are not described herein again.

To ensure communication security, an AKA procedure is executed between the terminal device and the network. In an implementation, the AMF determines whether to trigger the AKA procedure. In a triggering method, the terminal device sends an initial NAS message, for example, a registration request message, and the AMF may determine, based on the initial NAS message, whether to trigger authentication. In another triggering method, the AMF may determine, according to a local policy, when to trigger authentication. For example, when a non-access stratum (non-access stratum, NAS) counter (COUNT) is about to wrap around, the AMF determines to trigger authentication. In still another triggering method, if the terminal device moves from a 4G network to a 5G network, and the terminal device does not have a 5G native security context, the AMF may trigger a primary authentication procedure to obtain the 5G native security context.

In another implementation, in the AKA procedure, the AUSF in the home network may request the AMF for triggering a primary authentication procedure, or the UDM in the home network may request the AMF for triggering a primary authentication procedure. A process in which the AUSF triggers the primary authentication procedure may include: The AUSF requests the SEAF to execute an initial authentication procedure on the UE, and the SEAF initiates the primary authentication procedure. A process in which the UDM triggers the primary authentication procedure may include: The UDM requests the AMF to trigger the primary authentication procedure, and the AMF initiates the primary authentication procedure.

For a specific primary authentication procedure, refer to related descriptions in a conventional technology. This is not limited in this application, and related descriptions are not described again. As a quantity of devices that trigger the primary authentication procedure increases, the primary authentication procedure may be disordered. For example, in a process in which the AMF triggers the primary authentication procedure, the UDM also triggers the primary authentication procedure. In this case, the primary authentication procedure may be frequently executed. The frequently executed primary authentication procedure frequently updates a security key used by a user, and there is a potential failure risk. This deteriorates user experience. This application provides a method to resolve the foregoing problem. The following describes the method in detail.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. Sequence numbers of the foregoing processes do not mean an execution sequence, and the execution sequences of the processes should be determined based on functions and internal logic of the processes.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

FIG. 2 is a schematic flowchart of a primary authentication method according to an embodiment of this application. The method includes the following steps.

S201A: An AMF sends a first authentication and authorization request message to a first AUSF.

If an SEAF and the AMF are integrated, that is, the SEAF is a part of the AMF, in the procedure in FIG. 2, steps performed by the AMF may also be performed by a device in which the SEAF and the AMF are integrated. If the SEAF is not a part of the AMF, in the procedure in FIG. 2, steps performed by the AMF may also be performed by the SEAF.

The first authentication and authorization request message is used to request to execute a primary authentication procedure on a terminal device. A specific name of the first authentication and authorization request message is not limited, for example, may be a Nausf_UEAuthentication_Authenticate Request message.

The first authentication and authorization request message may include a subscription concealed identifier (subscription concealed identifier, SUCI) or a subscription permanent identifier (subscription permanent identifier, SUPI) of the terminal device, and a serving network name (SN name).

The AMF may send the first authentication and authorization request message when determining to trigger the primary authentication procedure on the terminal device. How the AMF determines to release and trigger the primary authentication procedure on the terminal device is not limited in this application. For example, when receiving a registration request message from the terminal device, the AMF may determine to trigger the primary authentication procedure on the terminal device. For another example, when determining that a NAS COUNT is about to wrap around, the AMF determines to trigger the primary authentication procedure.

S202A: The first AUSF sends an authentication obtaining request message to a UDM.

The authentication obtaining request message may also be referred to as a name such as a Nudm_UEAuthentication_Get Request message, and the authentication obtaining request message may include the serving network name and the SUCI or the SUPI of the terminal device.

S203A: The UDM sends an authentication obtaining response message to the first AUSF.

The authentication obtaining response message may also be referred to as a name such as a Nudm_UEAuthentication_Get Response message. The authentication obtaining response message includes an authentication vector, and the authentication vector is determined based on the SUPI. If the authentication obtaining request message includes the SUCI, the UDM may first determine the SUPI based on the SUCI, and then determine the authentication vector based on the SUPI. A specific determining process is not limited in this application, and details are not described herein again.

In addition, in this process, the UDM may further select an authentication method, to be specific, the UDM determines whether to use a 5G-AKA authentication method or an EAP-AKA' authentication method to perform authentication. The UDM may determine the authentication method based on the SUPI. A specific determining process is not limited in this application, and details are not described herein again.

S203A is followed by a specific process of the primary authentication procedure. The specific process of the primary authentication procedure is not limited in this application. For details, refer to existing descriptions of the 5G-AKA authentication method or the EAP-AKA' authentication method. Details are not described herein again.

The foregoing procedure describes a process in which the AMF triggers the primary authentication procedure. In this embodiment of this application, the UDM or a second AUSF in the home network may also trigger the primary authentication procedure. The following provides description by using an example in which a home network of the terminal device also triggers the primary authentication procedure in a process in which the AMF triggers the primary authentication procedure on the terminal device.

A home network device in the home network determines to trigger the primary authentication procedure. For details, refer to S201B. In this embodiment of this application, an example in which S202B may be performed after S201A and before S202A is used. In actual application, a sequence of the foregoing procedures is not limited.

S201B: The home network device determines to trigger the primary authentication procedure on the terminal device.

Triggering the primary authentication procedure on the terminal device may also be understood as that the home network device needs to authenticate the terminal device. Executing the primary authentication procedure on the terminal device means that the network side needs to verify whether the terminal device is a real or valid terminal device. Primary authentication on the terminal device is implemented by executing a 5G-AKA or EAP-AKA' procedure. If the 5G-AKA or EAP-AKA' procedure is successful, the primary authentication on the terminal device succeeds. Otherwise, the primary authentication on the terminal device fails.

The home network device may be the UDM or the second AUSF. Because the first AUSF is determined by the AMF by using a network repository function (network repository function, NRF), and the second AUSF is determined by the UDM by using the NRF or is determined by using an AUSF ID stored in the UDM, the second AUSF and the first AUSF may be a same AUSF, or may be different AUSFs.

If the home network device is the UDM, the UDM may determine, based on terminal device context information stored in the UDM, an AMF that is serving the terminal device. If the home network device is the second AUSF, the second AUSF may request, from the UDM, an AMF that is serving the terminal device. Particularly, in this case, the home network device and the UDM in FIG. 2 are a same device.

S202B: The home network device sends a first authentication request message to the AMF.

The first authentication request message is used to trigger the primary authentication procedure, and the primary authentication procedure is used to perform primary authentication on the terminal device; or the first authentication request message is used to trigger the primary authentication procedure on the terminal device. A specific name of the first authentication request message is not limited, for example, may be a Namff_UEAuthentication_ReAuthenticate Request message.

The first authentication request message may include an identifier of the terminal device. For example, the identifier may be the SUPI of the terminal device. The first authentication request message may further include a serving network name (SN name) of the terminal device.

When the home network device is the UDM, the first authentication request message may be directly sent by the UDM to the AMF, or may be forwarded by the AUSF to the AMF. When the first authentication request message is forwarded by the AUSF, the AUSF may generate a new second authentication request message based on the first authentication request message, and send the second authentication request message to the AMF. The second authentication request message is also used to trigger the primary authentication procedure. The second authentication request message may include information such as the identifier of the terminal device and the serving network name of the terminal device.

When the home network device is the second AUSF, the first authentication request message may be directly sent by the second AUSF to the AMF, or may be forwarded by the UDM to the AMF. When the first authentication request message is forwarded by the UDM, the UDM may generate a new second authentication request message based on the first authentication request message, and send the second authentication request message to the AMF.

S203B: After receiving the first authentication request message or the second authentication request message, the AMF determines whether to trigger the primary authentication procedure on the terminal device.

The AMF determines the terminal device based on the SUPI in the first authentication request message or the second authentication request message.

Optionally, the AMF determines whether the AMF is an AMF that is serving the terminal device. For example, the AMF checks, based on the SUPI, whether mobility management context information corresponding to the SUPI can be obtained. If the AMF cannot obtain the mobility management context information, the AMF rejects to start the primary authentication procedure. Executing the primary authentication procedure may mean that the AMF sends an authentication request message for the terminal device to the AUSF (where the AUSF herein may be the first AUSF, the second AUSF, or another AUSF), to request to execute the primary authentication procedure on the terminal device. After receiving the authentication request message, the AUSF requests an authentication vector from the UDM. For details, refer to descriptions in the 5G-AKA authentication method or the EAP-AKA' authentication method. Details are not described herein again.

In this application, if the AMF determines to trigger the primary authentication procedure on the terminal device, it does not mean that the AMF definitely triggers the primary authentication procedure on the terminal device. There may be a plurality of conditions for triggering the primary authentication procedure on the terminal device. That the AMF determines, based on the first authentication request message or the second authentication request message, whether to trigger the primary authentication procedure is only one of the plurality of conditions. The AMF may further determine, with reference to another primary authentication triggering or execution condition, whether to trigger the primary authentication procedure on the terminal device. After receiving the first authentication request message or the second authentication request message, if the AMF determines to trigger the primary authentication procedure on the terminal device, but another condition for triggering the primary authentication procedure is not met, the AMF may not execute the primary authentication procedure on the terminal device.

There may be a plurality of implementations for how the AMF specifically determines whether to trigger the primary authentication procedure on the terminal device. For example, in a first implementation, if the AMF may determine, based on the identifier of the terminal device, that a primary authentication procedure has been triggered on the terminal device within preset duration, the AMF may determine to reject the triggering of the primary authentication procedure.

For example, the AMF may record time at which primary authentication on the terminal device succeeds each time. For example, each time the AMF receives a response message including a primary authentication result indicating that the authentication succeeds, the AMF records time at which the response message is received as time at which the primary authentication succeeds. The AMF may establish an association relationship between the time at which the primary authentication succeeds and the identifier of the terminal device, to determine, based on the identifier of the terminal device, time at which the primary authentication on the terminal device succeeds each time.

There may be a plurality of implementations in which the AMF determines, based on time at which previous primary authentication on the terminal device succeeds, whether to start the primary authentication procedure. For example, if determining that an absolute value of a difference between first time at which the previous primary authentication on the terminal device succeeds and second time at which the first authentication request message is received is less than or equal to the preset duration, the AMF may reject the triggering of the primary authentication procedure on the terminal device. If the absolute value of the difference is greater than the preset duration, the AMF may determine to start the primary authentication procedure. The preset duration may be determined by the AMF, or may be agreed on in a protocol. Starting the primary authentication procedure may be understood as that the AMF sends the authentication request message for the terminal device to the AUSF. Rejecting to start the primary authentication procedure or skipping starting the primary authentication procedure on the terminal device may be understood as that the AMF does not send the authentication request message for the terminal device to the AUSF.

The primary authentication procedure affects a key architecture of the terminal device and updates a key being used by the terminal device. If the primary authentication procedure is initiated excessively frequently, user experience is affected and communication efficiency is reduced. According to the foregoing method, it can be avoided that the home network frequently triggers the primary authentication procedure on the terminal device. This improves user experience and communication efficiency.

In a second implementation, the AMF determines whether the home network device has permission to trigger or request to execute the primary authentication procedure. If determining that the home network device does not have the permission to trigger the primary authentication procedure, the AMF determines to reject the triggering or a request of the primary authentication procedure. If determining that the home network device has the permission to trigger the primary authentication procedure, the AMF determines that the primary authentication procedure can be triggered or requested.

For example, the AMF may determine, based on the identifier of the terminal device, whether the home network device has the permission to trigger the primary authentication procedure. For example, the AMF may determine subscription data of the terminal device based on the identifier of the terminal device, and determine, based on the subscription data, whether the home network device has the permission to trigger the primary authentication procedure. The subscription data may indicate whether the terminal device supports one or more of a steering of roaming (steering of roaming, SoR) procedure, a user equipment parameter update (UE parameter update, UPU) procedure, and an authentication and key management for applications (authentication and key management for applications, AKMA) procedure.

If the subscription data of the terminal device indicates that the terminal device supports one or more of the SoR procedure, the UPU procedure, and the AKMA procedure, it may be determined that the home network device has the permission to trigger or request the primary authentication procedure, and it may be determined to trigger the primary authentication on the terminal device. If the subscription data of the terminal device indicates that the terminal device does not support the SoR procedure, the UPU procedure, and the AKMA procedure, it may be determined that the home network device has no permission to trigger or request the primary authentication procedure, and it may be determined to reject the triggering of the primary authentication procedure on the terminal device.

For another example, the AMF determines whether the home network corresponding to the terminal device is consistent with a network in which the home network device is located, for example, determines whether locally stored information about the UDM/AUSF or information about mobile country code (mobile country code, MCC) and mobile network code (mobile network code, MNC) carried in the SUPI is consistent with an MCC and an MNC that correspond to a sender of the first authentication request message.

If the home network corresponding to the terminal device is the same as a network in which the home network device is located, it may be determined to trigger the primary authentication on the terminal device. If the home network corresponding to the terminal device is different from a network in which the home network device is located, it may be determined to reject the triggering of the primary authentication on the terminal device.

In a third implementation, the AMF may determine, based on the identifier of the terminal device, whether a primary authentication procedure is being executed on the terminal device, to determine whether to reject the triggering of the primary authentication procedure. If there is the primary authentication procedure being executed on the terminal device, the AMF may reject to start triggering the primary authentication procedure. If there is no primary authentication procedure, the AMF may determine to start the primary authentication procedure.

Specifically, when the AMF has triggered the authentication procedure on the terminal device and receives no corresponding authentication result, the AMF determines that the primary authentication procedure is being executed on the terminal device. When the AMF has triggered the authentication procedure on the terminal device and receives a corresponding authentication result, the AMF determines that no primary authentication procedure is executed on the terminal device.

For example, when receiving the first authentication request message, the AMF determines, based on the identifier of the terminal device, that the primary authentication procedure is being executed on the terminal device corresponding to the first authentication and authorization request message in S201A, and the AMF may reject to start the primary authentication procedure.

In addition, when the AMF determines whether to trigger the primary authentication on the terminal device, at least one of the first implementation to the third implementation may be used. The foregoing is merely an example, and there may be another manner of determining whether to trigger the primary authentication on the terminal device. For example, the AMF may set a timer for the terminal device, and each time the timer of the terminal device expires, the terminal device may be enabled to enter a deregistration state. When receiving the first authentication request message, the AMF determines whether the timer of the terminal device is about to expire. If the timer of the terminal device is about to expire, the AMF reject to start the primary authentication procedure. If the timer of the terminal device is not about to expire, the AMF starts the primary authentication procedure.

Optionally, S204B: The AMF sends a first authentication response message to the home network device.

The first authentication response message may also be referred to as a Namff_UEAuthentication_ReAuthenticate Response message or the like. A specific name of the first authentication response message is not limited in this application.

When the home network device is the UDM, and the UDM performs S201B, in other words, when the UDM triggers the primary authentication, the AMF may not send the first authentication response message. This is because the UDM does not need to track a status of the terminal device, and provides only an authentication vector for the terminal device. If the UDM needs to track whether authentication on the terminal device succeeds, the AMF needs to send the first authentication response message. In other words, if the UDM learns that authentication triggered by the UDM is canceled due to repeated authentication or another reason, the UDM deletes the terminal device context information.

In an implementation, if the AMF rejects to start the primary authentication procedure on the terminal device, the first authentication response message may include first rejection cause information, and the first rejection cause information may indicate a cause why the AMF rejects to start the primary authentication procedure on the terminal device, or the first rejection cause information indicates a cause why the AMF rejects the triggering of the primary authentication procedure. For example, the cause indicated by the first rejection cause information is that a primary authentication procedure is currently triggered by another device, or a primary authentication procedure has been executed on the terminal device within the preset duration. After the UDM receives the first authentication response message, and determines, based on the first rejection cause information, that the authentication cannot be performed on the UE, the UDM continues to use current UE context information. In other words, the UDM does not consider, due to a failure in performing the primary authentication on the UE by the UDM, that the UE cannot continue to use the network. For example, the UDM does not delete the UE context information, or the UDM does not initiate a deregistration procedure. After receiving the first rejection cause information, the UDM may perform further processing based on the cause information. For example, if a rejection cause is that time for the primary authentication is too short, the UDM may start a timer, and trigger the primary authentication procedure again after the timer expires. For another example, if the rejection cause is that there is a primary authentication procedure triggered by another device, the UDM may not perform any subsequent processing.

In another implementation, if the AMF determines to start the primary authentication procedure on the terminal device, optionally, the first authentication response message may include trigger indication information, and the trigger indication information indicates to execute the primary authentication procedure on the terminal device.

According to the foregoing method, when the home network device in the home network triggers the primary authentication procedure on the terminal device, the AMF determines whether to accept a request triggered by the home network device. When there is a conflict, the AMF may determine to skip starting the primary authentication procedure on the terminal device, thereby improving authentication efficiency.

In this embodiment of this application, when the AMF determines to trigger the primary authentication procedure on the terminal device, the AMF may start the primary authentication procedure on the terminal device, for example, perform S201A. The AMF, the second AUSF, and the UDM may perform the primary authentication on the terminal device by using the 5G-AKA authentication method or the EAP-AKA' authentication method. A specific process is not described again.

In this embodiment of this application, when the AMF rejects the triggering of the primary authentication procedure on the terminal device, if S201B is performed by the second AUSF, after receiving the rejection cause information, the second AUSF determines that a primary authentication procedure is already executed. If the second AUSF and the first AUSF are not the same AUSF, the second AUSF receives no message in S201A. In this case, the second AUSF may wait for the UDM to send a notification message, where the notification message indicates the second ASUF to delete a security context message of the terminal device.

Specifically, the second AUSF may start a timer, and timing duration of the timer may be predefined in a protocol, or may be determined by the second AUSF. When the timer expires, if the second AUSF has not received the notification message indicating to delete security context information of the terminal device, the second AUSF may trigger an authentication request procedure again, or the second AUSF actively deletes the security context information of the terminal device.

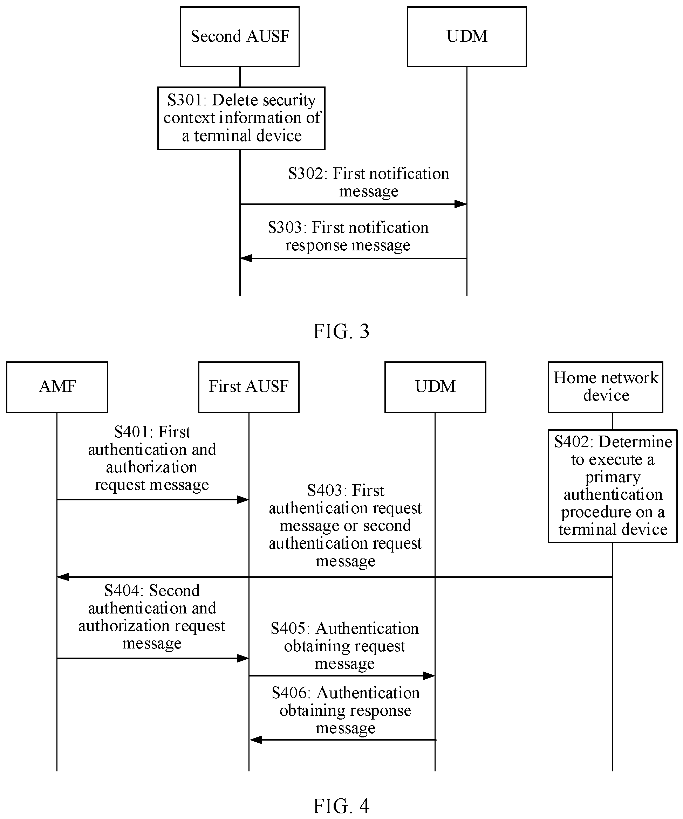

Optionally, before or after the second AUSF actively deletes the security context information of the terminal device, the second AUSF may send a message to the UDM, to notify the UDM that the second AUSF deletes the security context information of the terminal device. For details, refer to the procedure shown in FIG. 3.

It may be understood that the second AUSF has executed an authentication procedure on the terminal device. Therefore, the second AUSF stores a security context of the terminal device, for example, the SUPI of the terminal device and a corresponding K_{AUSF} and SoR Counter. When the SoR Counter is about to wrap around, the second AUSF determines to trigger the primary authentication procedure on the terminal device. As described above, the second AUSF may directly send the first authentication request message to the AMF, or first send a message to the UDM, and the UDM forwards the first authentication request message or sends the second authentication request message to the AMF. When the AMF receives the first authentication request message or the second authentication request message, if the AMF is executing the authentication procedure on the terminal device, the first AUSF is used, the terminal device is successfully authenticated in the procedure, and a new security context is generated, the security context of the terminal device stored in the second AUSF is outdated. Because the second AUSF cannot sense that the primary authentication procedure on the terminal device is being executed, and the second AUSF receives a rejection cause value, the second AUSF needs to delete the locally stored security context of the terminal device.

FIG. 3 is a schematic flowchart of a communication method according to an embodiment of this application. The method includes the following steps.

S301: A second AUSF deletes security context information of a terminal device.

Content included in the security context information is not limited. For example, the security context information may include a security key Kausf.

As described above, the second AUSF may delete the security context information of the terminal device when determining that a second notification message from a UDM is not received. The second notification message indicates the second AUSF to delete the security context information of the terminal device.

S302: The second AUSF sends a first notification message to the UDM, where the first notification message notifies the second AUSF of deleting the security context information of the terminal device stored in the second AUSF.

An execution sequence of S301 and S302 is not limited.

The first notification message may include an identifier of the terminal device and rejection cause information, and the identifier of the terminal device may be an SUPI of the terminal device.

S303: The UDM sends a first notification response message to the second AUSF.

If the second AUSF stores the security context information of the terminal device, the UDM stores an identifier of the second AUSF, to find the second AUSF for a SoR procedure or a UPU procedure, and uses the security context information, for example, Kausf, stored in the second AUSF. If the second AUSF initiates primary authentication on the terminal device, it indicates that the security context information of the terminal device cannot be used any longer. Therefore, the second AUSF needs to notify the UDM of deleting the identifier of the second AUSF. Therefore, after receiving the first notification message, the UDM deletes the identifier of the second AUSF. In this embodiment of this application, if two primary authentication procedures are simultaneously triggered, the two primary authentication procedures may alternatively be sequentially executed. Details are described below.

FIG. 4 is a schematic flowchart of a primary authentication method according to an embodiment of this application. The method includes the following steps.

S401: An AMF sends a first authentication and authorization request message to a first AUSF.

In S401, the AMF triggers a primary authentication procedure on a terminal device by sending the first authentication and authorization request message. For specific content of S401, refer to the descriptions in S201A. Details are not described herein again.

S402: A home network device determines to trigger a primary authentication procedure on the terminal device.

The home network device may be a UDM or a second AUSF. Particularly, if the home network device is the UDM, the home network device and the UDM in FIG. 4 are a same device.

S403: The home network device sends a first authentication request message or a second authentication request message to the AMF.

The first authentication request message may be a message directly sent by the home network device to the AMF, and the second authentication request message may be a message sent by the home network device to the AMF by using an AUSF. Functions of the two messages may be similar, and carried information may be the same.

After receiving the first authentication request message or the second authentication request message, the AMF may determine that the primary authentication procedure needs to be triggered on the terminal device. Because the AMF determines that the authentication procedure triggered in S401 is being executed, the AMF may suspend triggering the primary authentication procedure on the terminal device based on the first authentication request message or the second authentication request message.

Then, the primary authentication procedure executed by the AMF, the first AUSF, and the UDM on the terminal device, for example, may include:
In an implementation method, S404: The AMF may send a second authentication and authorization request message to the first AUSF.

For a function of the second authentication and authorization request message and carried information, refer to the foregoing descriptions of the first authentication and authorization request message. Details are not described herein again.

In an implementation method, because the AMF or an SEAF just completes the primary authentication procedure, the AMF or the SEAF may re-initiate the primary authentication procedure to the first AUSF. The method can avoid a security context deletion problem caused by initiating the primary authentication procedure by the AMF or the SEAF to another AUSF.

In another implementation method, the AMF sends a second authentication and authorization request message to another AUSF.

S405: The first AUSF sends an authentication obtaining request message to the UDM.

S406: The UDM sends an authentication obtaining response message to the first AUSF.

Another step is further included after S406. For details, refer to existing descriptions of a 5G-AKA authentication method or an EAP-AKA' authentication method. Details are not described herein again.

After receiving the authentication result of the primary authentication procedure triggered in S201, the AMF/SEAF restores the primary authentication procedure triggered in S401. If the primary authentication procedure triggered in S401 finally succeeds in authentication, security context information generated in the primary authentication procedure triggered in S401 replaces the security context information generated in the primary authentication procedure triggered in S201. In the procedure shown in FIG. 2, when the home network device determines to trigger the primary authentication procedure on the terminal device, the AMF determines whether to reject the primary authentication procedure. In this embodiment of this application, the UDM may alternatively determine whether to reject the primary authentication procedure triggered by the home network device. Details are described below.

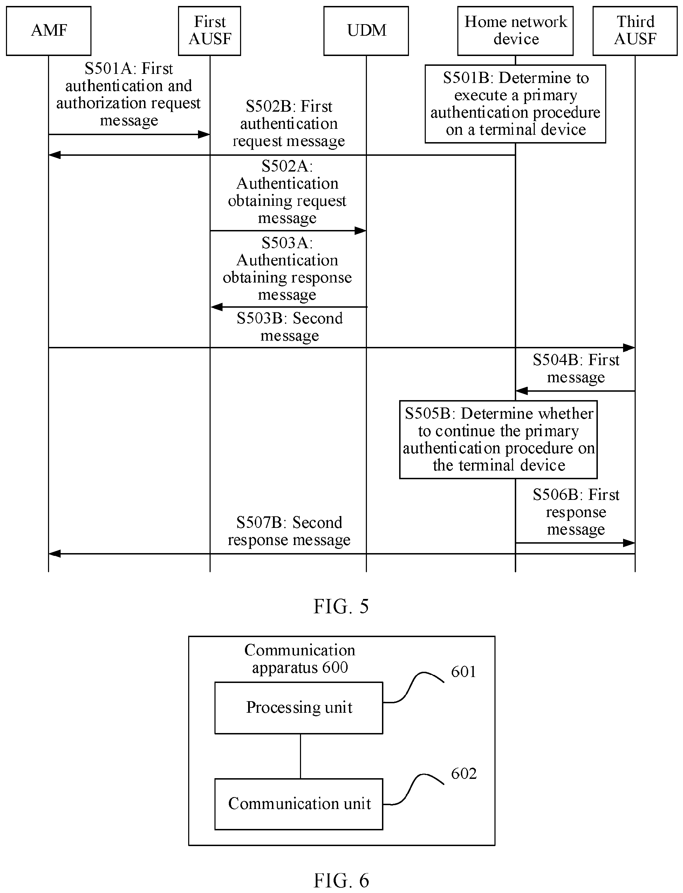

FIG. 5 is a schematic flowchart of a primary authentication method according to an embodiment of this application. The method includes the following steps.

S501A: An AMF sends a first authentication and authorization request message to a first AUSF. S502A: The first AUSF sends an authentication obtaining request message to a UDM.

S503A: The UDM sends an authentication obtaining response message to the first AUSF.

For specific content of S501A to S503A, refer to the descriptions of S201A to S203A. Details are not described herein again.

S503A is followed by a primary authentication procedure. A specific process of the primary authentication procedure is not limited in this application. For details, refer to existing descriptions of a 5G-AKA authentication method or an EAP-AKA' authentication method. Details are not described herein again.

The foregoing procedure describes a process in which the AMF triggers the primary authentication procedure. In this embodiment of this application, the UDM or a second AUSF in a home network may also trigger the primary authentication procedure. The following provides description by using an example in which a home network of a terminal device also triggers the primary authentication procedure in a process in which the AMF triggers the primary authentication procedure on the terminal device.

It is assumed that a home network device in the home network determines to trigger the primary authentication procedure. For details, refer to the following procedure.

S501B: The home network device determines to trigger the primary authentication procedure on the terminal device.

The home network device may be the UDM or the second AUSF. Particularly, if the home network device is the UDM, the home network device and the UDM in FIG. 5 are a same device.

S502B: The home network device sends a first authentication request message to the AMF.

The first authentication request message is used to trigger the primary authentication procedure on the terminal device.

For content of S502B, refer to the descriptions in S202B. Details are not described herein again.

S501B and S502B may be performed in a process of the primary authentication procedure triggered in S501A. In this process, after receiving the first authentication request message, the AMF may immediately trigger the primary authentication procedure, or may temporarily skip processing the first authentication request message, but process the first authentication request message after the primary authentication procedure triggered in S501A is completed.

S503B: The AMF sends a second message to a third AUSF.

As described above, the second message may be sent after the primary authentication procedure triggered in S501A is completed.

The second message is a message in response to the first authentication request message. The second message may include an identifier of the terminal device and a serving network name, and the identifier of the terminal device may be an SUPI. The second message may further include second information, and the second information indicates that the second message is the message in response to the first authentication request message.

The second message may also be referred to as a Nausf_UEAuthentication_Authenticate Request message or the like. A name of the second message is not limited in this application.

The third AUSF is determined by the AMF based on the identifier of the terminal device. The third AUSF and the first AUSF may be a same AUSF, or may be different AUSFs. The third AUSF and the second AUSF may be a same AUSF, or may be different AUSFs.

S504B: The third AUSF sends a first message to the UDM.

The first message may include the identifier of the terminal device and the serving network name. The first message may further include first information, and the first information indicates that the first message is a message in response to the first authentication request message. The first message may be used to request a first authentication vector.

The first message may also be referred to as a Nudm_UEAuthentication_Get Request message. A name of the first message is not limited in this application.

S505B: The UDM determines whether to continue the primary authentication procedure on the terminal device.

In other words, the UDM determines whether to return the first authentication vector. If the UDM returns the first authentication vector, it indicates that the primary authentication procedure continues to be executed on the terminal device. If the UDM rejects to return the first authentication vector, it indicates that the primary authentication procedure does not continue to be executed on the terminal device.

In this application, if the UDM determines to continue the primary authentication procedure on the terminal device, it does not indicate that the UDM definitely executes the primary authentication procedure on the terminal device. There may be a plurality of conditions for determining to continue the primary authentication procedure on the terminal device. The UDM may further determine, with reference to another primary authentication triggering or execution condition, whether to execute the primary authentication procedure on the terminal device. After receiving the first message, if the UDM determines to continue the primary authentication procedure on the terminal device, but another condition is not met, the UDM may not execute the primary authentication procedure on the terminal device.

There may be a plurality of implementations for how the UDM specifically determines whether to continue the primary authentication procedure on the terminal device. For example, in a first implementation, if the UDM may determine, based on the identifier of the terminal device, that a primary authentication procedure has been triggered on the terminal device within preset duration, the UDM may determine to reject the triggering of the primary authentication procedure.

For example, the UDM may record time at which primary authentication on the terminal device succeeds each time. For example, each time the UDM receives a response message including a primary authentication result indicating that the authentication succeeds, the UDM records time at which the response message is received as time at which the primary authentication succeeds. The UDM may establish an association relationship between the time at which the primary authentication succeeds and the identifier of the terminal device, to determine, based on the identifier of the terminal device, time at which the primary authentication on the terminal device succeeds each time. The UDM determines, based on time at which previous primary authentication on the terminal device succeeds, whether to continue to perform primary authentication on the terminal device, or determines whether to return the first authentication vector.

Specifically, if the UDM determines that an absolute value of a difference between first time at which the previous primary authentication on the terminal device is completed and second time at which the first authentication request message is received is less than or equal to the preset duration, the UDM may reject to continue the primary authentication procedure on the terminal device, or determine to reject to return the first authentication vector. If the absolute value of the difference is greater than the preset duration, the UDM may determine to continue to perform primary authentication on the terminal device, or determine to return the first authentication vector. The preset duration may be determined by the UDM, or may be agreed on in a protocol.

The primary authentication procedure affects a key architecture of the terminal device and updates a key being used by the terminal device. If the primary authentication procedure is initiated excessively frequently, user experience is affected and communication efficiency is reduced. According to the foregoing method, it can be avoided that the home network frequently triggers the primary authentication procedure on the terminal device. This improves user experience and communication efficiency.

In a second implementation, the UDM may determine, based on the identifier of the terminal device, whether a primary authentication procedure is being executed on the terminal device, to determine whether to reject the triggering of the primary authentication procedure. If there is the primary authentication procedure being executed on the terminal device, the UDM may reject the triggering of primary authentication on the terminal device again. If there is no primary authentication procedure executed on the terminal device, the UDM may determine to trigger primary authentication on the terminal device.

Specifically, when the UDM has triggered the authentication procedure on the terminal device and receives no corresponding authentication result, the UDM determines that the primary authentication procedure is being executed on the terminal device. When the UDM has triggered the authentication procedure on the terminal device and receives a corresponding authentication result, the UDM determines that no primary authentication procedure is executed on the terminal device.

For example, when receiving the first authentication request message, the UDM determines, based on the identifier of the terminal device, that the primary authentication procedure triggered by the first authentication and authorization request message in S501A is being executed, and the UDM may reject to trigger primary authentication on the terminal device. Specifically, when a user data management device has sent a second authentication vector used to perform authentication on the terminal device, if determining that an authentication result confirmation message corresponding to the second authentication vector is not received, the user data management device determines that the primary authentication procedure is being executed on the terminal device.

The foregoing is merely an example, and there may be another manner of determining whether to trigger the primary authentication on the terminal device. For details, refer to the descriptions in S203B. Details are not described herein again.

Optionally, S506B: The UDM sends a first response message to the third AUSF.

The first response message may also be referred to as a Nausf_UEAuthentication_Authenticate Response message or the like. A specific name of the first response message is not limited in this application.

In an implementation, if the UDM rejects the triggering of the primary authentication procedure on the terminal device, the first response message may include second rejection cause information, and the second rejection cause information indicates a cause for rejecting to return the first authentication vector, or the second rejection cause information may indicate a cause for rejecting to continue the primary authentication procedure on the terminal device. For example, the cause indicated by the second rejection cause information is that a primary authentication procedure is currently triggered by another device, or primary authentication has been performed on the terminal device within the preset duration. After the AMF receives the first response message, and determines, based on the second rejection cause information, that authentication cannot be performed on the UE, the AMF continues to use current UE context information. In other words, the AMF does not consider, due to a failure in performing the primary authentication on the UE by the AMF, that the UE cannot continue to use the network. For example, the AMF does not delete the UE context information, or the AMF does not initiate a deregistration procedure.

In another implementation, if the UDM determines to trigger the primary authentication on the terminal device, a first authentication response message may include trigger indication information, and the trigger indication information indicates to perform the primary authentication on the terminal device.

According to the foregoing method, when the home network device in the home network triggers the primary authentication on the terminal device, the UDM determines whether to accept a request triggered by the home network device. When there is a conflict, the UDM may determine to skip triggering the primary authentication procedure, thereby improving authentication efficiency.

In this embodiment of this application, if determining that the second AUSF is an AUSF that currently stores security context information of the terminal device, the UDM may not indicate the second AUSF to delete the security context information of the terminal device. If determining that the second AUSF is not an AUSF that currently stores security context information of the terminal device, the UDM may indicate the second AUSF to delete the security context information of the terminal device, and delete an identifier of the second AUSF stored in the UDM.

S507B: The third AUSF sends a second response message to the AMF.

The second response message may include the second rejection cause information.

The AMF determines, based on the second rejection cause information, that there is no authentication failure, and may continue to use the current security context information of the terminal device to serve the terminal device. Compared with a conventional technology, in this technology, if the AMF receives a rejection cause value indicating an authentication failure, the AMF needs to immediately stop serving the terminal device. However, because of the primary authentication procedure on the terminal device, the rejection is merely intended to avoid a complex operation caused by repeated authentication on the terminal device. Therefore, the authentication failure is not a real authentication failure, and the AMF may continue to serve the terminal device. According to the foregoing method, the UDM may determine whether to return the first authentication vector, to determine whether to continue the primary authentication procedure on the terminal device. This can avoid a conflict with another primary authentication procedure for performing authentication on the terminal device, and can avoid repeated execution of the primary authentication procedure for a plurality of times in a short time, thereby improving authentication efficiency and communication efficiency.

The foregoing embodiments may be separately implemented, or may be implemented in combination with each other. In the foregoing different embodiments, differences among the embodiments are described in detail. Except for other content of the differences, for other content between different embodiments, reference may be made to each other. It should be understood that not all the steps shown in the flowcharts are mandatory steps, and some steps may be added to or deleted from the flowcharts based on an actual requirement.

To implement functions in the method provided in the foregoing embodiments of this application, the AMF, the UDM, or the foregoing communication apparatus may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Division into modules in embodiments of this application is an example, and is merely logical function division. During actual implementation, there may be another division manner. In addition, functional modules in embodiments of this application may be integrated into one processor, or may exist alone physically, or two or more modules are integrated into one module. The integrated module may be implemented in a form of hardware, or may be implemented in a form of a software functional module.

Same as the foregoing concept, as shown in FIG. 6, an embodiment of this application further provides a communication apparatus 600. The communication apparatus 600 may be the AMF in FIG. 1, and is configured to implement the method corresponding to the AMF in the foregoing method embodiments. The communication apparatus may alternatively be the UDM in FIG. 1, and is configured to implement the method corresponding to the UDM in the foregoing method embodiments. For a specific function, refer to the descriptions in the foregoing method embodiments.

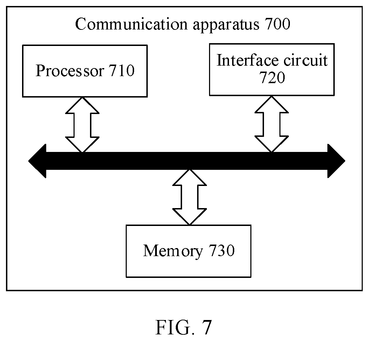

Specifically, the communication apparatus 600 may include a processing unit 601 and a communication unit 602. In this embodiment of this application, the communication unit may also be referred to as a transceiver unit, and may include a sending unit and/or a receiving unit, which are respectively configured to perform the steps of sending and receiving by the UDM or the AMF in the foregoing method embodiments. Communication apparatuses provided in embodiments of this application are described in detail with reference to FIG. 6 and FIG. 7.

In some possible implementations, behavior and functions of the AMF in the foregoing method embodiments may be implemented by using the communication apparatus 600, for example, the methods performed by the AMF in the embodiments in FIG. 2 to FIG. 5. For example, the communication apparatus 600 may be the AMF, a component (for example, a chip or a circuit) used in the AMF, a chip or a chip set in the AMF, or a part that is of a chip and that is configured to perform a related method function. The communication unit 602 may be configured to perform a receiving or sending operation performed by the AMF in the embodiments shown in FIG. 2 to FIG. 5, and the processing unit 601 may be configured to perform an operation other than the receiving or sending operation performed by the AMF in the embodiments shown in FIG. 2 to FIG. 5.

The communication unit is configured to receive a first authentication request message from a home network device, where the first authentication request message includes an identifier of a terminal device, the first authentication request message is used to trigger a primary authentication procedure on the terminal device, and the home network device is a network device in a home network of the terminal device.

The processing unit is configured to: when rejecting the triggering of the primary authentication procedure, send a first authentication response message to the home network device by using the communication unit, where the first authentication response message includes first rejection cause information, and the first rejection cause information indicates a cause for rejecting the triggering of the primary authentication procedure.

In a possible implementation, the processing unit is specifically configured to determine, based on the first authentication request message, to reject the triggering of the primary authentication procedure on the terminal device.

In a possible implementation, the processing unit is specifically configured to:
if determining, based on the identifier, that a primary authentication procedure has been triggered on the terminal device within preset duration, determine to reject the triggering of the primary authentication procedure.

In a possible implementation, the processing unit is specifically configured to: obtain, based on the identifier, subscription data of the terminal device; and determine, based on the subscription data, that the home network device does not have permission to trigger the primary authentication procedure.

In a possible implementation, the subscription data indicates that the terminal device does not support at least one of a steering of roaming procedure, a user equipment parameter update procedure, or an authentication and key management for applications procedure.

In a possible implementation, the processing unit is specifically configured to:
if determining, based on the identifier, that a primary authentication procedure is being executed on the terminal device, determine to reject the triggering of the primary authentication procedure.

In a possible implementation, the processing unit is specifically configured to:
when the access and mobility management function device has triggered the authentication procedure on the terminal device corresponding to the identifier, and receives no corresponding authentication result, determine that the primary authentication procedure is being executed on the terminal device.

In some possible implementations, behavior and functions of the UDM in the foregoing method embodiments may be implemented by using the communication apparatus 600, for example, the methods performed by the UDM in the embodiments in FIG. 2 to FIG. 5. For example, the communication apparatus 600 may be the UDM, a component (for example, a chip or a circuit) used in the UDM, a chip or a chip set in the AMF, or a part that is of a chip and that is configured to perform a related method function. The communication unit 602 may be configured to perform a receiving or sending operation performed by the UDM in the embodiments shown in FIG. 2 to FIG. 5, and the processing unit 601 may be configured to perform an operation other than the receiving or sending operation performed by the UDM in the embodiments shown in FIG. 2 to FIG. 5.

The user data management device receives a first message from an authentication server function device, where the first request message includes an identifier of a terminal device, and the first message is used to request a first authentication vector for the terminal device.

When rejecting to return the first authentication vector, the user data management device sends a first response message to the authentication server function device, where the first response message includes second rejection cause information, and the second rejection cause information indicates a cause for rejecting to return the first authentication vector.

According to the foregoing method, the user data management device may determine whether to return the first authentication vector, to determine whether to trigger a primary authentication procedure on the terminal device. This can avoid a conflict with another primary authentication procedure for performing authentication on the terminal device, and can avoid repeated execution of the primary authentication procedure for a plurality of times in a short time, thereby improving authentication efficiency and communication efficiency.

In a possible implementation, when determining to return the first authentication vector, the user data management device sends a first response message to the authentication server function device, where the first response message includes trigger indication information, and the trigger indication information indicates to execute the primary authentication procedure on the terminal device.

In a possible implementation, the user data management device determines, based on the first request message, to reject to return the first authentication vector.

In a possible implementation, that the user data management device determines, based on the first request message, to reject to return the first authentication vector includes: if determining, based on the identifier, that a primary authentication procedure has been triggered on the terminal device within preset duration, determining, by the user data management device, to reject to return the first authentication vector.

In a possible implementation, the first request message includes the identifier of the terminal device, and that the user data management device determines, based on the first request message, to reject to return the first authentication vector includes:
if determining, based on the identifier, that a primary authentication procedure is being executed on the terminal device, determining, by the user data management device, to reject to return the first authentication vector.

In a possible implementation, that the user data management device determines, based on the identifier, that the primary authentication procedure is being executed on the terminal device includes: when the user data management device has sent a second authentication vector used to perform authentication on the terminal device corresponding to the identifier, and receives no authentication result confirmation message corresponding to the second authentication vector, determining that the primary authentication procedure is being executed on the terminal device.

It should be understood that descriptions of the apparatus embodiments correspond to the descriptions of the method embodiments. For an apparatus structure used to implement the AMF and the UDM in FIG. 2 to FIG. 5, refer to the communication apparatus 600. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 602 and that is configured to implement a receiving function may be considered as a receiving unit, and a component that is in the communication unit 602 and that is configured to implement a sending function may be considered as a sending unit. In other words, the communication unit 602 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter, a transmitter machine, a transmitter circuit, or the like.

The foregoing is merely an example. The processing unit 601 and the communication unit 602 may further perform other functions. For more detailed descriptions, refer to related descriptions in the method embodiments shown in FIG. 2 to FIG. 5. Details are not described herein again.

FIG. 7 shows a communication apparatus 700 according to an embodiment of this application. The communication apparatus shown in FIG. 7 may be an implementation of a hardware circuit of the communication apparatus shown in FIG. 6. The communication apparatus is applicable to the foregoing flowchart, and performs functions of the AMF or the UDM in the foregoing method embodiments. For ease of description, FIG. 7 shows only main components of the communication apparatus.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run the instructions, or data generated after the processor 710 runs the instructions.

When the communication apparatus 700 is configured to implement the methods shown in FIG. 2 to FIG. 5, the processor 710 is configured to perform a function of the processing unit 601, and the interface circuit 720 is configured to perform a function of the communication unit 602.

When the communication apparatus is a chip used in the AMF, the chip of the AMF implements functions of the AMF in the foregoing method embodiments. The chip of the AMF receives information from another module (for example, a radio frequency module or an antenna) in the AMF, where the information is sent by the UDM to the AMF. Alternatively, the chip of the AMF sends information to another module (for example, a radio frequency module or an antenna) in the AMF, where the information is sent by the AMF to the UDM.

When the communication apparatus is a chip used in the UDM, the chip of the UDM implements functions of the UDM in the foregoing method embodiments. The chip of the UDM receives information from another module (for example, a radio frequency module or an antenna) in the UDM, where the information is sent by the AMF to the UDM. Alternatively, the chip of the UDM sends information to another module (for example, a radio frequency module or an antenna) in the UDM, where the information is sent by the UDM to the AMF.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, or a transistor logic device. The general-purpose processor may be a microprocessor or any regular processor.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, or a storage medium in any other form well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a UDM or an AMF. Alternatively, the processor and the storage medium may exist in a UDM or an AMF as discrete components.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may alternatively be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

## Claims

1. A primary authentication method, comprising:
receiving (S202B), by an access and mobility management function device (600, 700), a first authentication request message from a home network device, wherein the first authentication request message comprises an identifier of a terminal device, the first authentication request message is used to trigger a primary authentication procedure on the terminal device, and the home network device is a network device in a home network of the terminal device; and
when the access and mobility management function device (600, 700) rejects the triggering of the primary authentication procedure, sending (S204B), by the access and mobility management function device (600, 700), a first authentication response message to the home network device, wherein the first authentication response message comprises first rejection cause information, and the first rejection cause information indicates a cause for rejecting the triggering of the primary authentication procedure,
wherein the method further comprises:
determining (S203B), by the access and mobility management function device (600, 700) based on the first authentication request message, to reject the triggering of the primary authentication procedure on the terminal device,
wherein the determining, by the access and mobility management function device (600, 700) based on the first authentication request message, to reject the triggering of the primary authentication procedure comprises:
if determining, based on the identifier, that the home network device does not have permission to trigger the primary authentication procedure, determining, by the access and mobility management function device (600, 700), to reject the triggering of the primary authentication procedure,
wherein the determining, by the access and mobility management function device (600, 700) based on the identifier, that the home network device does not have permission to trigger the primary authentication procedure comprises:
obtaining, by the access and mobility management function device (600, 700), subscription data of the terminal device based on the identifier; and
determining, by the access and mobility management function device (600, 700) based on the subscription data, that the home network device does not have the permission to trigger the primary authentication procedure.

2. The method according to claim 1, wherein the determining, by the access and mobility management function device (600, 700) based on the first authentication request message, to reject the triggering of the primary authentication procedure comprises:
if determining, based on the identifier, that the primary authentication procedure has been triggered on the terminal device within preset duration, determining, by the access and mobility management function device (600, 700), to reject the triggering of the primary authentication procedure.

3. The method according to claim 1, wherein the subscription data indicates that the terminal device does not support at least one of a steering of roaming procedure, a user equipment parameter update procedure, or an authentication and key management for applications procedure.

4. The method according to claim 1, wherein the determining, by the access and mobility management function device (600, 700) based on the first authentication request message, to reject the triggering of the primary authentication procedure comprises:
if determining, based on the identifier, that the primary authentication procedure is being executed on the terminal device, determining, by the access and mobility management function device (600, 700), to reject the triggering of the primary authentication procedure.

5. The method according to claim 4, wherein the determining, by the access and mobility management function device (600, 700) based on the identifier, that the primary authentication procedure is being executed on the terminal device comprises:
when the access and mobility management function device (600, 700) has triggered the primary authentication procedure on the terminal device corresponding to the identifier, and receives no corresponding authentication result, determining, by the access and mobility management function device (600, 700), that the primary authentication procedure is being executed on the terminal device.

6. A communication apparatus (600, 700), comprising means for performing the method according to any one of claims 1 to 5.

7. A computer-readable storage medium comprising instructions which, when executed by a computer, cause the computer to carry out the method according to any one of claims 1 to 5.

8. A computer program comprising instructions which, when the computer program is executed by a computer, cause the computer to carry out the method of any one of claims 1 to 5.

## Patentansprüche

1. Primärauthentifizierungsverfahren, umfassend:
Empfangen (S202B), durch eine Zugangs- und Mobilitätsverwaltungsfunktionseinrichtung (600, 700), einer ersten Authentifizierungsanforderungsnachricht von einer Heimnetzwerkeinrichtung, wobei die erste Authentifizierungsanforderungsnachricht eine Kennung eines Endgeräts umfasst, die erste Authentifizierungsanforderungsnachricht verwendet wird, um eine Primärauthentifizierungsprozedur auf dem Endgerät auszulösen, und die Heimnetzwerkeinrichtung eine Netzwerkeinrichtung in einem Heimnetzwerk des Endgeräts ist; und
wenn die Zugangs- und Mobilitätsverwaltungsfunktionseinrichtung (600, 700) das Auslösen der Primärauthentifizierungsprozedur ablehnt, Senden (S204B), durch die Zugangs- und Mobilitätsverwaltungsfunktionseinrichtung (600, 700), einer ersten Authentifizierungsantwortnachricht an die Heimnetzwerkeinrichtung, wobei die erste Authentifizierungsantwortnachricht erste Ablehnungsursacheninformationen umfasst und die ersten Ablehnungsursacheninformationen einen Grund für das Ablehnen des Auslösens der Primärauthentifizierungsprozedur angeben,
wobei das Verfahren ferner Folgendes umfasst:
Bestimmen (S203B), durch die Zugangs- und Mobilitätsverwaltungsfunktionseinrichtung (600, 700) basierend auf der ersten Authentifizierungsanforderungsnachricht, das Auslösen der Primärauthentifizierungsprozedur auf dem Endgerät abzulehnen,
wobei das Bestimmen, durch die Zugangs- und Mobilitätsverwaltungsfunktionseinrichtung (600, 700) basierend auf der ersten Authentifizierungsanforderungsnachricht, das Auslösen der Primärauthentifizierungsprozedur abzulehnen, Folgendes umfasst:
wenn basierend auf der Kennung bestimmt wird, dass die Heimnetzwerkeinrichtung keine Berechtigung hat, die Primärauthentifizierungsprozedur auszulösen, Bestimmen, durch die Zugangs- und Mobilitätsverwaltungsfunktionseinrichtung (600, 700), das Auslösen der Primärauthentifizierungsprozedur abzulehnen,
wobei das Bestimmen, durch die Zugangs- und Mobilitätsverwaltungsfunktionseinrichtung (600, 700) basierend auf der Kennung, dass die Heimnetzwerkeinrichtung keine Berechtigung hat, die Primärauthentifizierungsprozedur auszulösen, Folgendes umfasst:
Erlangen, durch die Zugangs- und Mobilitätsverwaltungsfunktionseinrichtung (600, 700), von Abonnementdaten des Endgeräts basierend auf der Kennung; und
Bestimmen, durch die Zugangs- und Mobilitätsverwaltungsfunktionseinrichtung (600, 700) basierend auf den Abonnementdaten, dass die Heimnetzwerkeinrichtung nicht die Berechtigung hat, die Primärauthentifizierungsprozedur auszulösen.

2. Verfahren nach Anspruch 1, wobei das Bestimmen, durch die Zugangs- und Mobilitätsverwaltungsfunktionseinrichtung (600, 700) basierend auf der ersten Authentifizierungsanforderungsnachricht, das Auslösen der Primärauthentifizierungsprozedur abzulehnen, Folgendes umfasst:
wenn basierend auf der Kennung bestimmt wird, dass die Primärauthentifizierungsprozedur innerhalb einer voreingestellten Dauer ausgelöst wurde, Bestimmen, durch die Zugangs- und Mobilitätsverwaltungsfunktionseinrichtung (600, 700), das Auslösen der Primärauthentifizierungsprozedur abzulehnen.

3. Verfahren nach Anspruch 1, wobei die Abonnementdaten angeben, dass das Endgerät mindestens eine von einer Steering-of-Roaming-Prozedur, einer Benutzergeräteparameteraktualisierungsprozedur oder einer Authentifizierungs- und Schlüsselverwaltungsprozedur für Anwendungen nicht unterstützt.

4. Verfahren nach Anspruch 1, wobei das Bestimmen, durch die Zugangs- und Mobilitätsverwaltungsfunktionseinrichtung (600, 700) basierend auf der ersten Authentifizierungsanforderungsnachricht, das Auslösen der Primärauthentifizierungsprozedur auf dem Endgerät abzulehnen, Folgendes umfasst:
wenn basierend auf der Kennung bestimmt wird, dass die Primärauthentifizierungsprozedur auf dem Endgerät ausgeführt wird, Bestimmen, durch die Zugangs- und Mobilitätsverwaltungsfunktionseinrichtung (600, 700), das Auslösen der Primärauthentifizierungsprozedur abzulehnen.

5. Verfahren nach Anspruch 4, wobei das Bestimmen, durch die Zugangs- und Mobilitätsverwaltungsfunktionseinrichtung (600, 700) basierend auf der Kennung, dass die Primärauthentifizierungsprozedur auf dem Endgerät ausgeführt wird, Folgendes umfasst:
wenn die Zugangs- und Mobilitätsverwaltungsfunktionseinrichtung (600, 700) die Primärauthentifizierungsprozedur auf dem Endgerät, das der Kennung entspricht, ausgelöst hat und kein entsprechendes Authentifizierungsergebnis empfängt, Bestimmen, durch die Zugangs- und Mobilitätsverwaltungsfunktionseinrichtung (600, 700), dass die Primärauthentifizierungsprozedur auf dem Endgerät ausgeführt wird.

6. Kommunikationsvorrichtung (600, 700), umfassend ein Mittel zum Durchführen des Verfahrens nach einem der Ansprüche 1 bis 5.

7. Computerlesbares Speichermedium, umfassend Anweisungen, die bei Ausführung durch einen Computer bewirken, dass der Computer das Verfahren nach einem der Ansprüche 1 bis 5 ausführt.

8. Computerprogramm, umfassend Anweisungen, die, wenn das Computerprogramm durch einen Computer ausgeführt wird, bewirken, dass der Computer, das Verfahren nach einem der Ansprüche 1 bis 5 ausführt.

## Revendications

1. Procédé d'authentification principal, comprenant :
la réception (S202B), par un dispositif de gestion d'accès et de mobilité (600, 700), d'un premier message de demande d'authentification provenant d'un dispositif réseau domestique, dans lequel le premier message de demande d'authentification comprend un identifiant d'un dispositif terminal, le premier message de demande d'authentification est utilisé pour déclencher une procédure d'authentification principale sur le dispositif terminal, et le dispositif réseau domestique est un dispositif réseau dans un réseau domestique du dispositif terminal ; et
lorsque le dispositif de gestion d'accès et de mobilité (600, 700) rejette le déclenchement de la procédure d'authentification principale, l'envoi (S204B), par le dispositif de gestion d'accès et de mobilité (600, 700), d'un premier message de réponse d'authentification au dispositif réseau domestique, dans lequel le premier message de réponse d'authentification comprend des premières informations de cause de rejet, et les premières de cause de rejet indiquent la cause du rejet du déclenchement de la procédure d'authentification principale,
dans lequel le procédé comprend en outre :
la détermination (S203B), par le dispositif de gestion d'accès et de mobilité (600, 700) sur la base du premier message de demande d'authentification, du rejet du déclenchement de la procédure d'authentification principale sur le dispositif terminal,
dans lequel la détermination, par le dispositif de gestion d'accès et de mobilité (600, 700) sur la base du premier message de demande d'authentification, du rejet du déclenchement de la procédure d'authentification principale comprend :
s'il est déterminé, sur la base de l'identifiant, que le dispositif réseau domestique n'est pas autorisé à déclencher la procédure d'authentification principale, la détermination, par le dispositif de gestion d'accès et de mobilité (600, 700), du rejet du déclenchement de la procédure d'authentification principale,
dans lequel la détermination, par le dispositif de gestion d'accès et de mobilité (600, 700) sur la base de l'identifiant, que le dispositif réseau domestique n'est pas autorisé à déclencher la procédure d'authentification principale comprend :
l'obtention, par le dispositif de gestion d'accès et de mobilité (600, 700), de données d'abonnement du dispositif terminal sur la base de l'identifiant ; et
la détermination, par le dispositif de gestion d'accès et de mobilité (600, 700) sur la base des données d'abonnement, que le dispositif réseau domestique n'est pas autorisé à déclencher la procédure d'authentification principale.

2. Procédé selon la revendication 1, dans lequel la détermination, par le dispositif de gestion d'accès et de mobilité (600, 700) sur la base du premier message de demande d'authentification, du rejet du déclenchement de la procédure d'authentification principale comprend :
s'il est déterminé, sur la base de l'identifiant, que la procédure d'authentification principale a été déclenchée sur le dispositif terminal pour une durée prédéterminée, la détermination, par le dispositif de gestion d'accès et de mobilité (600, 700), du rejet du déclenchement de la procédure d'authentification principale.

3. Procédé selon la revendication 1, dans lequel les données d'abonnement indiquent que le dispositif terminal ne prend pas en charge au moins une d'une procédure de pilotage de l'itinérance, d'une procédure de mise à jour des paramètres de l'équipement utilisateur ou d'une procédure d'authentification et de gestion des clés pour les applications.

4. Procédé selon la revendication 1, dans lequel la détermination, par le dispositif de gestion d'accès et de mobilité (600, 700) sur la base du premier message de demande d'authentification, du rejet du déclenchement de la procédure d'authentification principale comprend :
s'il est déterminé, sur la base de l'identifiant, que la procédure d'authentification principale a été exécutée sur le dispositif terminal, la détermination, par le dispositif de gestion d'accès et de mobilité (600, 700), du rejet du déclenchement de la procédure d'authentification principale.

5. Procédé selon la revendication 4, dans lequel la détermination, par le dispositif de gestion d'accès et de mobilité (600, 700) sur la base de l'identifiant, que la procédure d'authentification principale est exécutée sur le dispositif terminal comprend :
lorsque le dispositif de gestion d'accès et de mobilité (600, 700) a déclenché la procédure d'authentification principale sur le dispositif terminal correspondant à l'identifiant et ne reçoit aucun résultat d'authentification correspondant, la détermination, par le dispositif de gestion d'accès et de mobilité (600, 700) que la procédure d'authentification principale est exécutée sur le dispositif terminal.

6. Appareil de communication (600, 700), comprenant un moyen pour réaliser le procédé selon l'une quelconque des revendications 1 à 5.

7. Support de stockage lisible par ordinateur comprenant des instructions qui, lorsqu'elles sont exécutées par un ordinateur, amènent l'ordinateur à exécuter le procédé selon l'une quelconque des revendications 1 à 5.

8. Programme informatique comprenant des instructions qui, lorsque le programme informatique est exécuté par un ordinateur, amènent l'ordinateur à mettre en œuvre le procédé selon l'une quelconque des revendications 1 à 5.
